(19) Europäisches Patentamt
European Patent Office
Office européen des brevets

(11) EP 2 157 123 A1

(12) **EUROPEAN PATENT APPLICATION**
published in accordance with Art. 153(4) EPC

(43) Date of publication:
**24.02.2010 Bulletin 2010/08**

(21) Application number: **08752840.2**

(22) Date of filing: **09.05.2008**

(51) Int Cl.:
***C08J 9/28*** *(2006.01)*

(86) International application number:
**PCT/JP2008/058986**

(87) International publication number:
**WO 2008/140123 (20.11.2008 Gazette 2008/47)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.05.2007 JP 2007127703**

(71) Applicant: **Sumitomo Chemical Company, Limited**
**Tokyo 104-8260 (JP)**

(72) Inventors:
- **SATO, Hiroyuki**
  **Niihama-shi**
  **Ehime 792-0009 (JP)**
- **OHTOMO, Shinji**
  **Niihama-shi**
  **Ehime 792-0003 (JP)**
- **OKAMOTO, Satoshi**
  **Tsukuba-shi**
  **Ibaraki 305-0047 (JP)**
- **SUZUKI, Yutaka**
  **Tsukuba-shi**
  **Ibaraki 305-0044 (JP)**

(74) Representative: **Hart-Davis, Jason et al**
**Cabinet Beau de Loménie**
**158, rue de l'Université**
**75340 Paris Cedex 07 (FR)**

# (54) PROCESS FOR PRODUCING POROUS FILM

(57) A process for producing a porous film containing a liquid crystal polyester comprising the following steps (a), (b) and (c) in this order: (a) dispersing 1 to 1,500 parts by weight of a filler, based on 100 parts by weight of a liquid crystal polyester, in a solution in which 100 parts by weight of the liquid crystal polyester is dissolved in a solvent to produce a slurry coating liquid; (b) coating the coating liquid on at least one side of a substrate to form a coating film; and (c) removing the solvent from the coating film, immersing the film in a solvent which does not dissolve the liquid crystal polyester, and drying the film to form a porous film containing a liquid crystal polyester.

EP 2 157 123 A1

## Description

### FIELD OF THE INVENTION

The present invention relates to a process for producing a porous film, and more particularly to a process for producing a porous film containing a liquid crystal polyester.

### BACKGROUND ART

A porous film is used as a separator in a non-aqueous electrolyte secondary battery such as a lithium ion secondary battery and a lithium polymer secondary battery. The separator is made of a porous film having micropores. In the non-aqueous electrolyte secondary battery, the separator is required to have high heat resistance. As a porous film which achieves high heat resistance issue, a porous film comprising a liquid crystal polyester is exemplified. As a process for producing such a film, JP-A-2001-342282 discloses a process for producing a porous film comprising melting and kneading a composition containing a liquid crystal polyester and an inorganic compound, drawing the mixture to form a film, and extracting the inorganic compound from the film.
According to the process for producing a porous film as described above, however, the operations such as melting and kneading, drawing and extracting are complicated.

### SUMMARY OF THE INVENTION

An object of the present invention is to provide a process for producing a porous film having high heat resistance in simpler operations at low costs.
In order to solve the above problem, the present inventors have conducted earnest studies. As a result, they have completed the present invention. That is, the present application provides the following inventions.

<1> A process for producing a porous film containing a liquid crystal polyester comprising the following steps (a), (b) and (c) in this order:

(a) dispersing 1 to 1,500 parts by weight of a filler, based on 100 parts by weight of a liquid crystal polyester, in a solution in which 100 parts by weight of the liquid crystal polyester is dissolved in a solvent to produce a slurry coating liquid;
(b) coating the coating liquid on at least one side of a substrate to form a coating film; and
(c) removing the solvent from the coating film, immersing the film in a solvent which does not dissolve the liquid crystal polyester, and drying the film to form a porous film containing a liquid crystal polyester.

<2> The process of above <1>, wherein the substrate is a porous film.
<3> The process of above <2>, wherein the substrate is a porous film comprising a thermoplastic resin which is different from the liquid crystal polyester.

### BRIEF DESCRIPTION OF THE DRAWING

Fig 1 is a schematic view of a device for measuring shutdown temperatures.

Explanations of Reference Numerals:

7: Impedance analyzer
8: Separator
9: Electrolyte
10: SUS plate
11: Teflon® spacer
12: Spring
13: Electrode
14: Thermocouple

15: Data-processing device

EMBODIMENTS OF THE INVENTION

The present invention provides a process for producing a porous film containing a liquid crystal polyester comprising the following steps (a), (b) and (c) in this order:

(a) dispersing 1 to 1,500 parts by weight of a filler, based on 100 parts by weight of a liquid crystal polyester, in a solution in which 100 parts by weight of the liquid crystal polyester is dissolved in a solvent to produce a slurry coating liquid;
(b) coating the coating liquid on at least one side of a substrate to form a coating film; and
(c) removing the solvent from the coating film, immersing the film in a solvent which does not dissolve the liquid crystal polyester, and drying the film to form a porous film containing a liquid crystal polyester.

In the present invention, examples of the liquid crystalline polyester include:

(1) a polyester obtained by the polymerization of an aromatic hydroxycarboxylic acid, an aromatic dicarboxylic acid, and an aromatic diol;
(2) a polyester obtained by the polymerization of the same or different kinds of aromatic hydroxycarboxylic acids;
(3) a polyester obtained by the polymerization of an aromatic dicarboxylic acid and an aromatic diol;
(4) a polyester obtained by the reaction of a crystalline polyester such as polyethylene terephthalate with an aromatic hydroxycarboxylic acid;
(5) a polyester obtained by the polymerization of an aromatic hydroxycarboxylic acid, an aromatic dicarboxylic acid, and an aromatic amine having a phenolic hydroxyl group;
(6) a polyester obtained by the polymerization of an aromatic dicarboxylic acid and an aromatic amine having a phenolic hydroxyl group;
(7) a polyester obtained by the polymerization of an aromatic hydroxycarboxylic acid, an aromatic dicarboxylic acid, and an aromatic diamine; and the like.

In the present invention, the liquid crystalline polyester of (5), (6) or (7) is preferably used, because the resulting porous film containing a liquid crystal polyester has better heat resistance.
Instead of these aromatic hydroxycarboxylic acids, aromatic dicarboxylic acids, aromatic diols and aromatic amines having phenolic hydroxyl groups, ester forming derivatives or amide forming derivatives thereof may be used.
Here, examples of the ester forming derivatives and amide forming derivatives of a carboxylic acid include derivatives in which the carboxyl group is converted into a derivative such as an acid chloride or an acid anhydride, which is highly reactive to promote a polyester-forming reaction or a polyamide-forming reaction, and derivatives in which the carboxyl group is reacted with an alcohol or ethylene glycol, or an amine to form an ester or an amide, which forms a polyester or a polyamide by transesterification or transamidation.
Examples of the ester forming derivatives of a phenolic hydroxyl group include derivatives in which the phenolic hydroxyl group is reacted with a carboxylic acid to form an ester, which forms a polyester by transesterification.
Examples of the amide forming derivatives of an amino group include derivatives in which the amino group is reacted with a carboxylic acid to form an amide, which forms a polyamide by transamidation.
The aromatic hydroxycarboxylic acid, aromatic dicarboxylic acid, aromatic diol, aromatic amine and aromatic diamine having a phenolic hydroxyl group may be substituted by a halogen atom such as a chlorine atom or a fluorine atom, an alkyl group such as a methyl group or an ethyl group, an aryl group such as a phenyl group or the like, so long as the substituents do not impair the ester- or amide-forming property.
The repeating units of the liquid crystalline polyester (A) described above may include the following repeating units, but are not limited thereto. Repeating units derived from an aromatic hydroxycarboxylic acid:

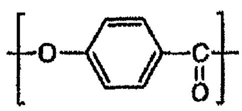
($A_1$)

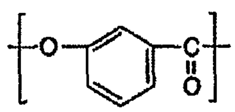
($A_2$)

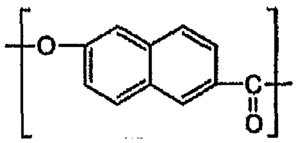 ($A_3$)

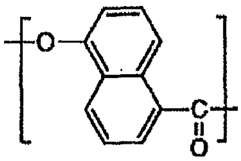 ($A_4$)

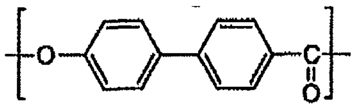 ($A_5$)

The above repeating units may be substituted by a halogen atom, an alkyl group or an aryl group.

Repeating units derived from an aromatic dicarboxylic acid:

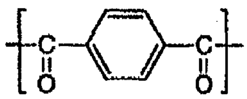 ($B_1$)

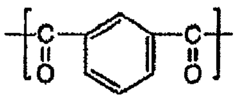 ($B_2$)

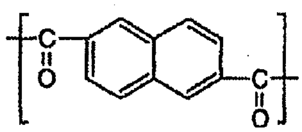 ($B_3$)

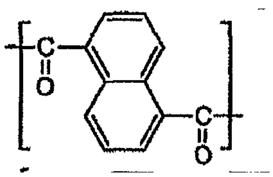 ($B_4$)

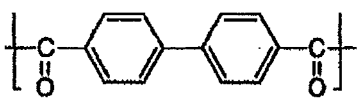 ($B_5$)

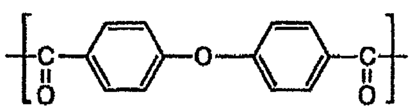 ($B_6$)

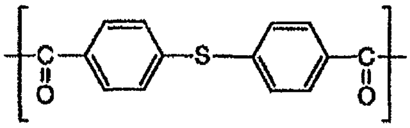

(B7)

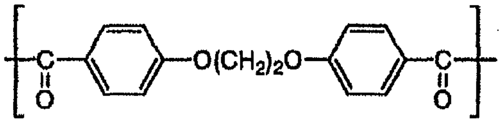

(B8)

The above repeating units may be substituted by a halogen atom, an alkyl group or an aryl group.

Repeating units derived from an aromatic diol:

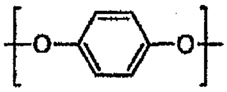

(C1)

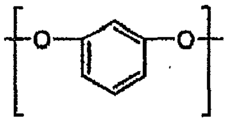

(C2)

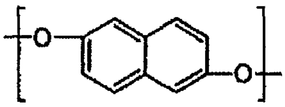

(C3)

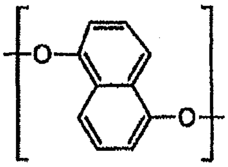

(C4)

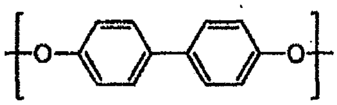

(C5)

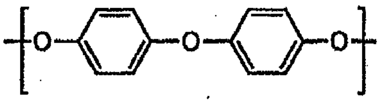

(C6)

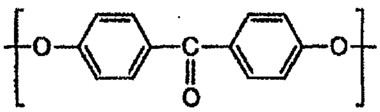

(C7)

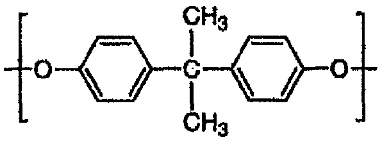

($C_8$)

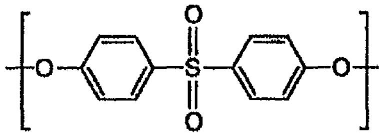

($C_9$)

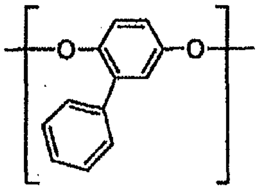

($C_{10}$)

The above repeating units may be substituted by a halogen atom, an alkyl group or an aryl group.

Repeating units derived from an aromatic amine having a phenolic hydroxyl group:

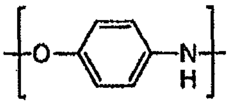

($D_1$)

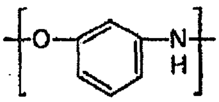

($D_2$)

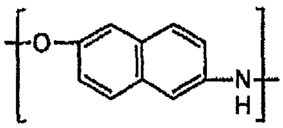

($D_3$)

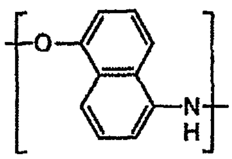

($D_4$)

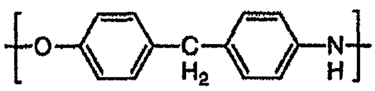

($D_5$)

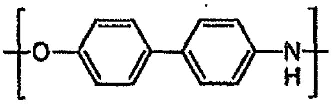

($D_6$)

The above repeating units may be substituted by a halogen atom, an alkyl group or an aryl group.

Repeating units derived from an aromatic diamine:

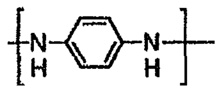
($E_1$)

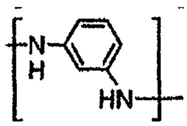
($E_2$)

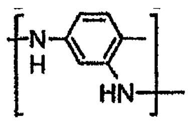
($E_3$)

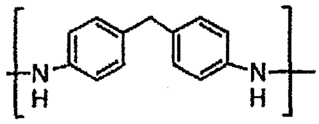
($E_4$)

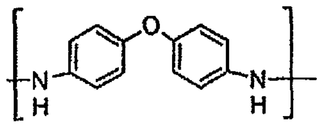
($E_5$)

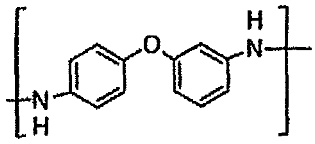
($E_6$)

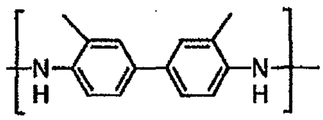
($E_7$)

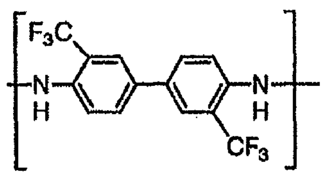
($E_8$)

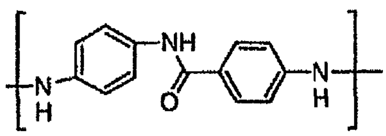
($E_9$)

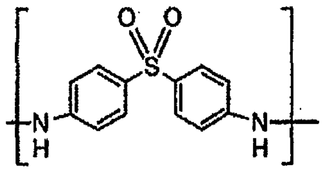

($E_{10}$)

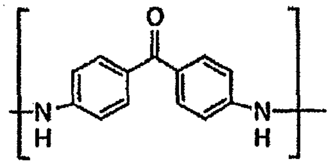

($E_{11}$)

The above repeating units may be substituted by a halogen atom, an alkyl group or an aryl group.

Examples of the alkyl group by which the repeating units may be substituted include alkyl groups having 1 to 10 carbon atoms. Among them, a methyl group, an ethyl group, a propyl group and a butyl group are preferable. Examples of the aryl group by which the repeating units may be substituted include aryl groups having 6 to 20 carbon atoms. Among them, a phenyl group is preferable.

In order to improve the heat resistance of the porous film containing liquid crystal polyester of the present invention, the liquid crystalline polyester (A) preferably comprises the repeating units represented by the formula ($A_1$), ($A_3$), ($B_1$), ($B_2$) or ($B_3$).

Here, preferable combinations containing the repeating units include combinations (a) to (d) describe below.

(a): the combination of the repeating units ($A_1$), ($B_2$) and ($D_1$);
the combination of the repeating units ($A_3$), ($B_2$) and ($D_1$); the combination of the repeating units ($A_1$), ($B_1$), ($B_2$) and ($D_1$);
the combination of the repeating units ($A_3$), ($B_1$), ($B_2$) and ($D_1$);
the combination of the repeating units ($A_3$), ($B_3$) and ($D_1$); or the combination of the repeating units ($B_1$), ($B_2$) or ($B_3$), and ($D_1$).
(b): the combinations of the above (a) in each of which a part or all of the units ($D_1$) is replaced with the units ($D_2$).
(c): the combinations of the above (a) in each of which a part of the units ($A_1$) is replaced with the units ($A_3$).
(d): the combinations of the above (a) in each of which a part or all of the units ($D_1$) is replaced with the units ($E_1$) or ($E_5$).

A more preferable combination contains 30 to 80% by mole of repeating units derived from at least one compound selected from the group consisting of p-hydroxybenzoic acid and 2-hydroxy-6-naphthoic acid, 10 to 35% by mole of repeating units derived from at least one compound selected from the group consisting of 4-hydroxyaniline and 4,4'-diaminodiphenyl ether, and 10 to 35% by mole of repeating units derived from at least one compound selected from the group consisting of terephthalic acid and isophthalic acid, and a particularly preferable combination contains 30 to 80% by mole of repeating units derived from 2-hydroxy-6-naphthoic acid, 10 to 35% by mole of repeating units derived from 4-hydroxyaniline, and 10 to 35% by mole of repeating units derived from isophthalic acid.

The weight average molecular weight of the liquid crystalline polyester is not particularly limited, and it is usually from about 5,000 to about 500,000, preferably from about 100,000 to about 500,000.

Methods for producing the liquid crystalline polyester are not particularly limited in the present invention, and an example thereof is a method comprising acylating an aromatic hydroxycarboxylic acid, an aromatic diol, or an aromatic amine or diamine having a phenolic hydroxyl group with an excessive amount of a fatty acid anhydride (acylation) to give an acylated compound, and polymerizing the resulting acylatd compound with an aromatic hydroxycarboxylic acid and/or an aromatic dicarboxylic acid by transesterification or transamidation.

In the acylation reaction, the fatty acid anhydride is added in an amount of preferably from 1.0 to 1.2 equivalents, more preferably from 1.05 to 1.1 equivalents per one equivalent of the total of the phenolic hydroxyl group and the amino group. When the amount of the fatty acid anhydride to be added is too small, the acylated compound, the aromatic hydroxycarboxylic acid, the aromatic dicarboxylic acid and the like tend to sublimate during the polymerization through transesterification or transamidation so that pipes in a reactor or the like may be easily clogged. When the amount of the fatty acid anhydride to be added is too large, the resulting liquid crystalline polyester may be remarkably colored.

The acylation reaction is preferably performed at a temperature of 130 to 180°C for 5 minutes to 10 hours, more preferably at a temperature of 140 to 160°C for 10 minutes to 3 hours.

The fatty acid anhydride used in the acylation reaction is not particularly limited, and examples thereof includes acetic anhydride, propionic anhydride, butyric anhydride, isobutyric anhydride, valeric anhydride, pivalic anhydride, 2-ethyl hexanoic anhydride, monochloroacetic anhydride, dichloroacetic anhydride, trichloroacetic anhydride, monobromoacetic anhydride, dibromoacetic anhydride, tribromoacetic anhydride, monofluoroacetic ahnydride, difluoroacetic anhydride, trifluoroacetic anhydride, glutaric anhydride, maleic anhydride, succinic anhydride, β-bromopropionic anhydride, and the like. These anhydrides may be used as a mixture of two or more of them. Acetic anhydride, propionic anhydride, butyric anhydride and isobutyric anhydride are preferable, and acetic anhydride is more preferable, from the viewpoints of costs and operability.

In the polymerization through transesterification or transamidation, the acyl groups in the acylated compound are preferably present in an amount of 0.8 to 1.2 times the equivalent of the carboxyl groups. The polymerization is preferably performed at a temperature of 400°C or less, more preferably 350°C or less. The rate of a temperature increase is preferably 0.1 to 50°C/minute, more preferably 0.3 to 5°C/minute. In this step, in order to shift the equilibrium, it is preferable to remove the by-produced fatty acids and unreacted fatty acid anhydrides from the system by evaporation, and the like.

The acylation reaction, and the polymerization through transesterification or transamidation may be performed in the presence of a catalyst. As the catalyst, known catalysts which have been conventionally used as a catalyst for polyester polymerization can be used. Examples of the catalysts include metal salt catalysts such as magnesium acetate, stannous acetate, tetrabutyl titanate, lead acetate, sodium acetate, potassium acetate and antimony trioxide; organic compound catalysts such as N,N-dimethylaminopyridine and N-methyhmidazole; and the like. The catalyst can be present in the acylation reaction, and it may not be necessary to remove the catalyst from a reaction mixture after the acylation reaction. When the catalyst is not removed from the reaction mixture after the acylation reaction, the subsequent treatment (polymerization through transesterification or transamidation) can be performed using the resulting reaction mixture as such. In this case, the catalyst as listed above may be supplemented.

The polymerization through transesterification or transamidation is usually performed by melt polymerization, while the combination of melt polymerization and solid-phase polymerization may be employed. The solid-phase polymerization may be performed by recovering a polymer from a melt polymerization step, solidifying the polymer, pulverizing the solidified polymer to give the powder-form or flake-form polymer, and carrying out solid-phase polymerization by a known method. Specifically, for example, a method comprising thermally treating the polymer in a solid-phase state at a temperature of 20 to 350°C for 1 to 30 hours under an inert atmosphere such as nitrogen may be exemplified. The solid-phase polymerization may be performed with stirring or without stirring the polymer in a static state. When a suitable stirring device is provided, a melt polymerization chamber and a solid-phase polymerization chamber can be combined into one reaction chamber. After the solid-phase polymerization, the resulting liquid crystalline polyester may be pelletized in a known manner and then used.

The liquid crystalline polyester may be produced, for example, using a batch equipment or a continuous equipment, and can be produced as described above.

In the step (a), a polar amide solvent or a polar urea solvent is preferably used as the solvent when the liquid crystalline polyester has a nitrogen atom. Specific examples thereof include N,N-dimethylformamide, N,N-dimethylacetoamide, N-methyl-2-pyrrolidone (NMP), and tetramethylurea.

In the step (a), a protic solvent is preferably used as the solvent when the liquid crystalline polyester has no nitrogen atom. Specific examples thereof include halogen-substituted phenol compounds of the formula ($L_1$):

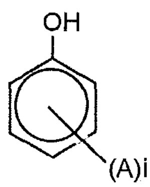

($L_1$)

wherein A represents a halogen atom or a trihalomethyl group, and i is an integer of 1 to 5, provided that when i is 2 or more, plural A's may be the same or different.

In the formula ($L_1$), a halogen atom may be a fluorine atom, a chlorine atom, a bromine atom or an iodine atom. Among them, a fluorine atom or a chlorine atom is preferable, since the liquid crystalline polyester is readily dissolved in the solvent. In this case, examples of the halogen-substituted phenol compound include pentafluorophenol, tetrafluorophenol, o-chlorophenol, p-chlorophenol, etc. Among them, o-chlorophenol and p-chlorophenol are more preferable, and o-chlorophenol is particularly preferable.

In the step (a), the amount of the solvent for the liquid crystalline polyester may be suitably selected. Usually, 0.01 to 100 parts by weight of the liquid crystalline polyester is used based on 100 parts by weight of the solvent. When the amount of the liquid crystalline polyester is less than 0.01 part by weight, the thickness of the resulting porous film

containing a liquid crystal polyester tends to be uneven. On the other hand, when the amount of the liquid crystalline polyester exceeds 100 parts by weight, it may be difficult to dissolve the polyester. From the viewpoints of operability and economical efficiency, the amount of the liquid crystalline polyester is preferably from 0.5 to 50 parts by weight, more preferably from 1 to 10 parts by weight, based on 100 parts by weight of the solvent.

According to the present invention, the liquid crystal polyester is dissolved in the solvent to form a solution as described above.

In the present invention, the material of the filler may be selected from an organic powder, an inorganic powder and the mixture thereof.

Examples of the organic powder described above include powders made of organic substances, for example, homopolymers of styrene, vinyl ketone, acrylonitrile, methyl methacrylate, ethyl methacrylate, glycidyl methacrylate, glycidyl acrylate or methyl acrylate, or copolymers of two or more monomers; fluororesins such as polytetrafluoroethylene, tetrafluoroethylene-hexafluoropropylene copolymers, tetrafluoroethylene-ethylene copolymers and polyvinylidene fluoride; melamine resins; urea resins; polyolefins; and polymethacrylates. The organic powder may be used alone or as a mixture of two or more of them. Among these organic powders, the polytetrafluoroethylene powder is preferable because of the chemical stability thereof.

Examples of the inorganic powder as described above include powders made of inorganic substances, for example, metal oxides, metal nitrides, metal carbides, metal hydroxides, carbonates, and sulfates, and includes particles made of alumina, silica, titanium dioxide, or calcium carbonate. The inorganic powder may be used alone or as a mixture of two or more of them. Among these inorganic powders, the alumina powder is preferable because of the chemical stability thereof. Herein, preferably, all particles constituting the fillers are alumina particles. More preferably, all particles constituting the fillers are alumina particles, and a part or all of the particles are substantially spherical alumina particles. In the present invention, the substantially spherical alumina particles encompass completely spherical particles.

The shape of the filler particles used in the present invention may include substantially spherical, plate, cylindrical, needle, whisker and fiber shapes, and particles with either shape may be used. The particles constituting the filler preferably have an average particle diameter of 0.01 μm or more and 1 μm or less, from the viewpoints of the strength and smoothness of the porous film containing a liquid crystal polyester.

Here, the average particle diameter of the filler is a value measured by a scanning electron microscopy. Specifically, 50 particles are randomly selected from a microphotograph of the filler particles, the particle diameter of each particle is measured, and the particle diameters of the 50 particles are averaged and used as a number average particle diameter of the filler particles.

In the present invention, a pressure disperser (a Gorline homogenizer or a nanomizer) and the like may be used as a device for obtaining the slurry coating liquid by dispersing the filler in the solution.

In the step (b), examples of the method for applying the slurry coating liquid on a substrate include knife coating, blade coating, bar coating, gravure coating and die coating. The bar or knife coating is simple and easy, while the die coating is industrially preferable because an apparatus for die coating has such a structure that the solution is not exposed to an air. The coating step may be repeated twice or more in some cases. Preferably, the coating is continuously performed using a coating device described in JP-A-2001-316006 and the method described in JP-A-2001-23602.

In the step (c), for removing the solvent, a method comprising evaporation a solvent is usually employed. Examples of the method for evaporating the solvent include methods such as heating, depressurization and ventilation. Among them, it is preferable to heat the film to evaporate the solvent from the viewpoints of the production efficiency and operability, and it is more preferable to heat the film to evaporate the solvent with ventilation.

In the step (c), examples of the solvent which does not dissolve the liquid crystal polyester include water and alcohols. The immersion process also functions to wash the resulting porous film containing a liquid crystal polyester. After the immersion, drying is performed by heating, depressurization, or ventilation to give the porous film containing a liquid crystal polyester.

When the porous film containing a liquid crystal polyester is obtained as a single layer film, the film should be removed from the substrate. In this case, the substrate may include one that does not dissolve or swell in a solvent which does not dissolve the liquid crystal polyester. Specific examples of the substrate include, as a resin film, olefinic resin films such as the films of polyethylene, polypropylene and polymethyl pentene; polyester films such as the films of polyethylene terephthalate (PET) and polyethylene naphthalate (PEN); super engineering plastic films such as the films of polyimide and PPS; and fluororesin films such as the films of polytetrafluoroethylene (PTFE) and ethylene-tetrafluoroethylene copolymers (ETFE), and besides the resin films, include metal plates such as copper plates and stainless steel plates, ceramic plates such as glass plates besides the resin films.

In the step (b), if a porous film is used as the substrate, the removal of the film as described above may not be necessarily performed. Here, the porous film may be any porous film. For example, the porous film containing a liquid crystal polyester of the present invention may be used. When a porous film is made of a thermoplastic resin which is different from the liquid crystal polyester, a laminated porous film having a shutdown function can be obtained, which is particularly useful as a separator for a non-aqueous electrolyte secondary battery such as a lithium ion secondary battery

and a lithium polymer secondary battery.

The thermoplastic resin, which is different from the liquid crystal polyester, preferably deforms or softens at 80 to 180°C, and the resin which does not dissolve in the electrolyte of the battery may be selected, when the porous film is used in a non-aqueous electrolyte secondary battery. Spceifically, polyolefins such as polyethylene and polypropylene, and thermoplastic polyurethane can be exemplified, and they may be used as a mixture of two or more of them. The polyethylene is preferable, because it softens at a lower temperature to shut down an electric current. Specific examples of the polyethylene include low density polyethylene, high density polyethylene, linear polyethylene, and so on, as well as ultrahigh molecular weight polyethylene. For increasing the piercing strength of the porous film made of the thermoplastic resin, the thermoplastic resin preferably contains at least ultrahigh molecular weight polyethylene. From the viewpoint of the production of the porous film made of the thermoplastic resin, it may sometimes be preferable that the thermoplastic resin contains a wax comprising a polyolefin with a low molecular weight (a weight average molecular weight of 10,000 or less).

The porous film made of the thermoplastic resin which is different from the liquid crystal polyester has micropores. The size (diameter) of the micropores is usually 3 μm or less, preferably 1 μm or less, and the porosity is usually from 30 to 80% by volume, preferably from 40 to 70% by volume. When a temperature exceeds a usual operating temperature in the non-aqueous electrolyte secondary battery, the thermoplastic resin deforms or softens, so that it functions to clog the micropores (shutdown function).

According to the present invention, the thickness of the resulting porous film containing a liquid crystal polyester can be made thin, such as 1 μm or more and 30 μm or less, further 1 μm or more and 10 μm or less, by controlling the concentrations of the filler and the liquid crystal polyester in the slurry coating liquid. The pore size (diameter) of the resulting porous film containing a liquid crystal polyester can also be made small, such as 3 μm or less, further 1 μm or less. The resulting porous film containing a liquid crystal polyester has a porosity of usually 30 to 80% by volume, preferably 40 to 70% by volume. According to the present invention, the porous film containing a liquid crystal polyester having micropores formed uniformly can be obtained. Thereby, the film can be made to have high strength while maintaining sufficient gas permeability.

A method for producing the porous film made of the thermoplastic resin (the thermoplastic resin is different from the liquid crystal polyester) is not particularly limited, and includes a method wherein a film composed of a thermoplastic resin produced by a known method, such as a method comprising the steps of forming a film from a thermoplastic resin to which a plasticizer has been added, and then removing the plasticizer from the film with an adequate solvent, as described in JP-A-7-29563, or a method comprising the steps of providing a film of a thermoplastic resin which has been produced by a conventional process, and selectively drawing structurally weak amorphous parts of the film to form micropores, as described in JP-A-7-304110. When the porous film comprising a thermoplastic resin is made of a polyolefin resin containing an ultrahigh molecular weight polyethylene and a low molecular weight polyolefin having a weight average molecular weight of 10,000 or less, it is produced preferably by the following method, from the viewpoint of the production cost: a method comprising the following steps:

(1) preparing a polyolefin resin composition by kneading 100 parts by weight of an ultrahigh molecular weight polyethylene, 5 to 200 parts by weight of a low molecular weight polyolefin having a weight average molecular weight of 10,000 or less, and 100 to 400 parts by weight of an inorganic filler;
(2) molding the polyolefin resin composition prepared in step (1) to form a sheet;
(3) removing the inorganic filler from the sheet obtained in step (2); and
(4) drawing the sheet obtained in the step (3) to form a shut-down layer, or a method comprising the steps of

> (1) preparing a polyolefin resin composition by kneading 100 parts by weight of an ultrahigh molecular weight polyethylene, 5 to 200 parts by weight of a low molecular weight polyolefin having a weight average molecular weight of 10,000 or less, and 100 to 400 parts by weight of an inorganic filler;
> (2) molding the polyolefin resin composition prepared in step (1) to form a sheet;
> (3) drawing the sheet obtained in step (2); and
> (4) removing the inorganic filler from the drawn sheet obtained in step (3) to form a porous film comprising a thermoplastic resin.

Hereinafter, the present invention will be described in more detail with reference to the Examples. The evaluation of films (porous films containing a liquid crystal polyester, polyethylene porous films, laminated porous films of porous films containing a liquid crystal polyester and polyethylene porous films), and the evaluations and production of a non-aqueous electrolyte secondary battery were performed as follows:

Evaluations of Film

(1) Measurement of Thickness

The thickness of a porous film containing a liquid crystal polyester was measured in accordance with JIS standard (K7130-1992). In a laminated porous film, a value obtained by subtracting the thickness of a polyethylene porous film from the thickness of the laminated porous film was used as a thickness.

(2) Measurement of Gas Permeability by Gurley Method

The gas permeability of a film was measured using a Gurley densometer with a digital timer manufactured by Yasuda Seiki Seisakusho Ltd. in accordance with JIS P 8117.

(3) Porosity

A film was cut into a square sample (10 cm x 10 cm), and the weight W (g) and the thickness D (cm) of the sample were measured. The weight (Wi (g)) of each layer in the sample was measured, the volume of each layer was calculated from Wi and the absolute specific gravity (absolute specific gravity i (g/cm$^3$)) of the material of each layer. Then, the porosity (% by volume) was calculated by the following equation:

$$\text{Porosity (\% by volume)} = 100 \times \{1 - (\text{W1/Absolute Specific Gravity 1} + \text{W2/Absolute Specific Gravity 2} + \cdots + \text{Wn/Absolute Specific Gravity n})/(10 \times 10 \times D)\}$$

(4) Measurement of Free Chlorine Content

A film was immersed in ion-exchange water in a container, and the container was placed in a pressure cooker and maintained still at 120°C for 24 hours under a pressure of saturated water vapor to extract chlorine ions from the film into the ion-exchange water. The amount of the chlorine in the ion-exchange water was measured according to ion chromatography to obtain a free chlorine content in the film.

(5) Measurement of Shutdown Temperature of Film

Using a cell for measuring a shutdown temperature as shown in Fig. 1 (hereinafter referred to as a "cell"), a shutdown temperature was measured.

A 6 cm square separator (8) was arranged on one of SUS plate electrodes (10) and impregnated with an electrolyte (9) in vacuo. Then, an electrode (13) with a spring (12) was put on the separator (8) so that the spring faced upward. The other SUS plate electrode (10) was put on a spacer (11) arranged on the electrode (10), and both of the electrodes (10), (10) were fastened so as to apply a surface pressure of 1 kgf/cm$^2$ to the separator (8) through the spring (12) and the electrode (13). Thereby, a cell was assembled. As the electrolyte (9), an electrolyte containing 1 mol/L of $LiPF_6$ dissolved in a mixed solution of 30% by volume of ethylene carbonate, 35% by volume of dimethyl carbonate and 35% by volume of ethylmethyl carbonate was used. The terminals of an impedance analyzer (7) were connected to both of the electrodes (10), (10) of the assembled cell, and a resistance was measured at 1 kHz. Also, a thermocouple (14) was set just under the separator so that a temperature was measured at the same time, and the temperature was raised at a heating rate of 2°C/minute to perform measurements of impedance and a temperature. A temperature at which an impedance reached 1,000 Ω at 1 kHz was defined as a shutdown temperature (SD temperature). After the shutdown, the temperature was further raised, and a temperature at which a film was broken, and the internal resistance began to lower upon measurement was defined as a temperature at which a film is thermally broken.

Production and Evaluation of Non-Aqueous Electrolyte Secondary Battery

(1) Production of Cathode Sheet

Carboxymethylcellulose, polytetrafluoroethylene, acetylene black, and a lithium cobaltate powder as a cathode active material were dispersed in water and the mixture was kneaded to prepare a paste of an electrode mixture for a

cathode. The weight ratio of the components contained in this paste, that is, the weight ratio of carboxymethylcellulose : polytetrafluoroethylene : acetylene black : lithium cobaltate powder : water was 0.75 : 4.55 : 2.7 : 92 : 45. The paste was applied to both sides of a cathode collector made of an aluminum foil having a thickness of 20 μm in predefined surface regions, and the obtained product was dried, roll-pressed, and slit to obtain a cathode sheet. The surface region of the aluminum foil having no applied electrode mixture for a cathode had a length of 1.5 cm, and an aluminum lead was resistance-welded to the uncoated region.

(2) Production of Anode Sheet

Carboxymethylcellulose, natural graphite and artificial graphite were dispersed in water and the mixture was kneaded to prepare a paste of an electrode mixture for an anode. The weight ratio of the components contained in this paste, that is, the weight ratio of carboxymethyl cellulose : natural graphite : artificial graphite : water was 2.0 : 58.8 : 39.2 : 122.8. The paste was applied to the both sides of an anode collector made of a copper foil having a thickness of 12 μm in predefined surface regions, and the obtained product was dried, roll-pressed and slit, thereby obtaining an anode sheet. The surface region of the copper foil having no applied electrode mixture for an anode had a length of 1.5 cm, and a nickel lead was resistance-welded to the uncoated region.

(3) Production of Non-Aqueous Electrolyte Secondary Battery

The film used as a separator, the cathode sheet, the anode sheet (length of a surface region having no applied electrode mixture for an anode: 30 cm) were laminated in the order of the cathode sheet, the separator and the anode sheet so that the part of the anode sheet with a surface region having no applied electrode mixture for an anode constituted the outermost layer. Then, the laminate was wound from its one end to form an electrode member. The electrode member was inserted in a battery can and then impregnated with an electrolytic solution comprising $LiPF_6$ dissolved in a mixed liquid of ethylene carbonate, dimethyl carbonate and ethyl methyl carbonate at a volume ratio of 16 : 10 : 74 in a concentration of 1 mole/liter. The can was sealed via a gasket with a battery lid, which also acted as a positive terminal to obtain a 18650 cylindrical battery (non-aqueous electrolyte secondary battery). When the laminated porous film was used as a separator, the laminated porous film, the cathode sheet and the anode sheet were laminated so that the porous film containing a liquid crystal polyester was brought into contact with the cathode sheet, and the polyethylene porous film in the separator was brought into contact with the anode sheet.

(4) Evaluations

The cylindrical battery as produced above was fixed to a special mount, a nail having a diameter of 2.5 mm set on an oil press nail penetration tester was lowered at a rate of 5 mm/second, and a thermal behavior was observed when the nail was penetrated the center of the cylindrical part of the battery.

EXAMPLE 1

A reactor equipped with a stirrer, a torque meter, a nitrogen gas inlet tube, a thermometer and a reflux condenser was charged with 941 g (5.0 moles) of 2-hydroxy-6-naphthoic acid, 273 g (2.5 moles) of 4-aminophenol, 415.3 g (2.5 moles) of isophthalic acid, and 1123 g (11 moles) of acetic anhydride. After the interior space of the reactor was thoroughly replaced with nitrogen gas, the temperature was raised to 150°C over 15 minutes under a nitrogen gas stream, and the mixture was refluxed for 3 hours while maintaining the above temperature.

Subsequently, the temperature was raised to 320°C over 170 minutes while distilling off by-produced acetic acid and unreacted acetic anhydride from the reaction system,. The time point at which the increase of a torque was confirmed was considered as the termination of a reaction, and the content was recovered from the reactor. The resulting solid product was cooled to room temperature and pulverized in a coarse grinder, and the pulverized material was maintained at 250°C for 3 hours under nitrogen atmosphere to proceed the polymerization reaction in a solid phase. The obtained powder was observed at 350°C with a polarization microscope, and was found to have Schlieren patterns, which are the characteristics of a liquid crystal phase. Then, 8 g of the powder (liquid crystalline polyester) was added to 92 g of N-methyl-2-pyrrolidone, and the mixture was heated to 120°C to dissolve the powder completely, thus resulting in the formation of a transparent solution containing a liquid crystalline polyester at a concentration of 8% by weight.

Additional N-methyl-2-pyrrolidone was added to the solution and the mixture was stirred to give a solution containing a liquid crystalline polyester at concentration of 3% by weight. To 100 g of the solution, 9 g of high purity alumina (manufactured by Nippon Aerosil Co., Ltd.; average particle diameter: 0.013 μm) was added. After that, the alumina was dispersed in the solution by stirring the mixture at a high revolution rate of 6,000 rpm to give a slurry coating liquid.

An A4 sized glass plate was supplied, and a polyethylene porous film (manufactured by Mitsui Chemicals, Inc. film thickness: 16 μm; gas permeability: 121 seconds/100 cc; average pore diameter: 0.06 μm; porosity: 49% by volume), which was cut into a rectangular shape, was put on the glass plate. Then, one side of the narrow sides was fixed to the glass plate with an adhesive tape. Next, a stainless steel coating bar with a diameter of 20 mm was arranged in parallel with the porous film to leave a clearance of 0.04 mm between the porous film and the bar. The slurry coating liquid prepared in the previous step was put on the porous film in front of the coating bar, and then the both sides of the bar were held with both hands, the slurry coating liquid was coated on the whole surface of the porous film by moving the bar forward. Then, the film with the glass plate was kept in an oven at 70°C for 30 minutes to evaporate the solvent, and the film was peeled from the glass plate. The film was washed with flowing water for 5 minutes in a resin tray, fixed to an A4 sized metal frame, and dried in an oven at 70°C for 10 minutes together with the metal frame to give a laminated porous film.

The laminated porous film formed had a thickness of 20 μm, a porosity of 45%, a gas permeability of 450 seconds/100 cc, and a free chlorine content of 60 ppm by weight. The laminated porous film had a shutdown temperature of 134°C, and it was not thermally broken even at 200°C, from which it was found that this film had high heat resistance.

In order to determine the weather resistance of the laminated porous film produced in the above, the film was allowed to stand at 25°C for 12 hours under a relative humidity of 80%, and then it was used as a separator for assembling a non-aqueous electrolyte secondary battery. When a nail was penetrated the battery, and then the thermal behavior was observed, the temperature was gradually raised. From the results, it was found that the insulation property under high humidity, in other words, the weather resistance was excellent.

EXAMPLE 2

A porous film containing a liquid crystal polyester was prepared in the same manner as in EXAMPLE 1 except that a PET film having a thickness of 100 μm was used in place of a polyethylene porous film and the clearance was adjusted to 0.20 mm, and then the PET film was peeled to obtain a single layer porous film. This film had a thickness of 20 μm, a porosity of 50%, and a gas permeability of 460 seconds/100 cc. This film was not broken even at 200°C, from which it was found that this film had high heat resistance.

Industrial Applicability

According to the present invention, a porous film having high heat resistance can be inexpensively produced in simpler operations. The porous film obtained by the process of the present invention is utilizable as a filtration membrane, a separation membrane, a separator for a battery such as a non-aqueous electrolyte secondary battery, or a capacitor, and thus the present invention is industrially very useful.

## Claims

**1.** A process for producing a porous film containing a liquid crystal polyester comprising the following steps (a), (b) and (c) in this order:

(a) dispersing 1 to 1,500 parts by weight of a filler, based on 100 parts by weight of a liquid crystal polyester, in a solution in which 100 parts by weight of the liquid crystal polyester is dissolved in a solvent to produce a slurry coating liquid;
(b) coating the coating liquid on at least one side of a substrate to form a coating film; and
(c) removing the solvent from the coating film, immersing the film in a solvent which does not dissolve the liquid crystal polyester, and drying the film to form a porous film containing a liquid crystal polyester.

**2.** The process of claim 1, wherein the substrate is a porous film.

**3.** The process of clam 2, wherein the substrate is a porous film comprising a thermoplastic resin which is different from the liquid crystal polyester.

Fig. 1

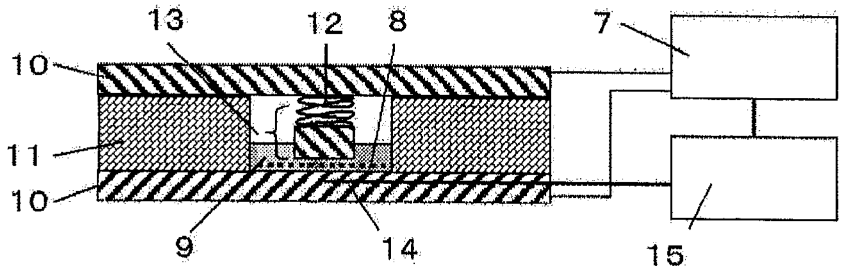

**INTERNATIONAL SEARCH REPORT**

International application No.
PCT/JP2008/058986

A. CLASSIFICATION OF SUBJECT MATTER
*C08J9/28*(2006.01)i

According to International Patent Classification (IPC) or to both national classification and IPC

B. FIELDS SEARCHED

Minimum documentation searched (classification system followed by classification symbols)
C08J9/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-318331 A (Teijin Ltd.), 07 November, 2003 (07.11.03), Claims; Par. Nos. [0012], [0024], [0026] (Family: none) | 1-3 |
| A | JP 2005-336367 A (Daicel Chemical Industries, Ltd.), 08 December, 2005 (08.12.05), Claims; Par. Nos. [0015] to [0028], [0045] to [0049] (Family: none) | 1-3 |
| A | JP 7-289864 A (Shin-Etsu Polymer Co., Ltd.), 07 November, 1995 (07.11.95), Claims; Par. Nos. [0009], [0011], [0013] (Family: none) | 1-3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 May, 2008 (29.05.08) | 10 June, 2008 (10.06.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/058986

C (Continuation). DOCUMENTS CONSIDERED TO BE RELEVANT

| Category* | Citation of document, with indication, where appropriate, of the relevant passages | Relevant to claim No. |
|---|---|---|
| A | JP 8-311233 A (Teijin Ltd.), 26 November, 1996 (26.11.96), Claims; Par. Nos. [0011] to [0031] (Family: none) | 1-3 |
| A | JP 2001-206972 A (Ube Industries, Ltd.), 31 July, 2001 (31.07.01), Claims; Par. Nos. [0009], [0014] to [0018] (Family: none) | 1-3 |
| A | JP 2003-165863 A (Denso Corp.), 10 June, 2003 (10.06.03), Claims; Par. Nos. [0014] to [0016], [0021] to [0024] (Family: none) | 1-3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2001342282 A
- JP 2001316006 A
- JP 2001023602 A
- JP 7029563 A
- JP 7304110 A